(19) Europäisches Patentamt
European Patent Office
Office européen des brevets

(11) Numéro de publication: **0 135 413**
**B1**

## FASCICULE DE BREVET EUROPEEN

(12)

(45) Date de publication du fascicule du brevet:
09.03.88

(51) Int. Cl.⁴: **H 04 N 9/12**

(21) Numéro de dépôt: **84401490.2**

(22) Date de dépôt: **13.07.84**

(54) **Dispositif d'affichage d'une image de télévision de grandes dimensions.**

(30) Priorité: **22.07.83 FR 8312175**

(43) Date de publication de la demande:
**27.03.85 Bulletin 85/13**

(45) Mention de la délivrance du brevet:
**09.03.88 Bulletin 88/10**

(84) Etats contractants désignés:
**DE FR GB**

(56) Documents cités:
**FR - A - 2 490 382**
**US - A - 3 909 525**

**PATENTS ABSTRACTS OF JAPAN, vol. 3, no. 111**
**(E-138), 17 septembre 1979, page 136 E 138**

(73) Titulaire: **THOMSON-CSF, 173, Boulevard Haussmann,**
**F-75379 Paris Cédex 08 (FR)**

(72) Inventeur: **Favreau, Michel, THOMSON-CSF**
**SCPI 173, bld Haussmann, F-75379 Paris Cedex 08 (FR)**

(74) Mandataire: **Turlèque, Clotilde et al, THOMSON-CSF**
**SCPI 19, avenue de Messine, F-75008 Paris (FR)**

## Description

L'invention concerne les dispositifs permettant d'afficher une image de télévision sur un grand écran, s'applique aux moniteurs et récepteurs de télévision.

De nombreux dispositifs de ce type ont été réalisés mais les résultats obtenus jusqu'à présent ne sont pas parfaitement satisfaisants. Il est connu, notamment des projecteurs comportant trois tubes cathodiques et un dispositif optique projetant et superposant sur un écran diffusant trois images fournis par ces trois tubes cathodiques. Ce type de dispositif est realtivement économique mais peu lumineux, et donne une image de qualité inférieure à celle d'un tube cathodique à masque utilisé classiquement pour des images de diagonale inférieure à 80 cm. Son rendement lumineux est mauvais à cause de la faible ouverture du dispositif optique de projection et le contraste obtenu est faible à cause des diffusions provoquées par le dispositif optique et par les écrans cathodiques eux-mêmes parce qu'ils ont à fournir une puissance lumineuse très élevée. Il est connu aussi des dispositifs de projection mettant en œuvre des valves de lumière, qui donnent de bons résultats mais sont difficiles à mettre en œuvre et relativement onéreux. Il est connu aussi des dispositifs de projection mettant en œuvre des faisceaux laser, mais leur rendement lumineux est extrêmement faible.

Une autre solution consiste à construire un dispositif d'affichage à vision directe mais de très grandes dimensions. Des tubes cathodiques de grandes dimensions ont été construits mais leur réalisation industrielle se heurte à d'énormes difficultés technologiques lorsque la diagonale d'écran dépasse 80 cm, d'autre part la profondeur du tube provoque un encombrement important. Pour éviter ces inconvénients il est connu d'utiliser des faisceaux électroniques guidés en lignes et en colonnes par des électrodes de formes appropriées, mais cette solution paraît actuellement difficile à réaliser industriellement.

D'autre part des dispositifs mettant en œuvre des plasmas comme sources d'électrons pour exciter des luminophores sont en cours d'études. Ce procédé pose de nombreux problèmes: chaque élément du dispositif doit être commandé par une tension constante modulée en durée; le contraste obtenu est faible (20:1); la puissance lumineuse est environ 5 fois inférieure à celle d'un tube cathodique classique.

Le brevet US-A 4 368 485 décrit un dispositif d'affichage d'images de télévision constitué par une multitude de petits tubes cathodiques, de format carré, juxtaposés pour former une matrice. Chaque tube ne reproduit que 4 points d'image, ce qui permet de rendre imperceptibles les espaces dus aux jointures entre les tubes, par contre le nombre de tubes, de bobines de déviations, et de circuits de multiplexage est extraordinairement élevé. La complexité de ce dispositif se traduit par un coût très élevé.

Le brevet US-A 3 909 525 décrit un dispositif d'affichage comportant une pluralité de tubes cathodiques trichromes classiques, juxtaposés pour former une matrice, chaque tube cathodique reproduisant une position rectangulaire de l'image à afficher et étant associé à un dispositif optique agrandissant cette portion d'image dans un rapport tel que les portions d'images agrandies apparaissent jointives, en dépit de l'espace occupé par les jointures entre les tubes. Ce document ne décrit pas de moyens pour fournir à chaque tube les signaux vidéo et les signaux de balayage nécessaires pour afficher sur chacun une portion déterminée de l'image à afficher.

Un dispositif simple à réaliser peut être constitué de moniteurs classiques, de mémoires tampons et de moyens de commande pour commander la lecture et l'écriture dans ces mémoires et synchroniser les balayages des moniteurs. Un moniteur classique, fonctionnant selon un standard européen, réalise un balayage de 312,5 lignes par trame en 20 mS. Par exemple, une image complète comportant 625 lignes peut être reproduite sur une matrice de 10×10 moniteurs, chaque moniteur reproduisant 62 lignes d'image, chaque ligne d'image étant reproduite par 10 lignes de balayage du moniteur, en lisant 10 fois les informations correspondantes dans une mémoire tampon associée au moniteur considéré.

Les informations correspondant au bas d'une trame ne sont disponibles que 20 mS après le début de l'analyse de cette trame. D'autre part, chaque portion d'image nécessite 20 mS pour être affichée puisque les moniteurs sont supposés avoir un balayage standard. En particulier la dernière portion d'image, située dans le coin inférieur droit est affichée complètement après un délai de 20 mS par rapport au début de l'affichage de cette portion d'image, lequel début est retardé de 9 fois 62 lignes + 9 lignes, par rapport à l'instant où l'image commence à être restitué dans le coin supérieur gauche de l'écran. La somme de ces deux retards est pratiquement égale à 40 mS. Le remplacement d'une image par une autre dure donc 40 mS au lieu des 20 mS habituels.

Lorsqu'une suite de trames représente des objets animés d'une grande vitesse cette durée de renouvellement de l'image restituée est très gênante car l'œil perçoit un retard entre les modifications du haut et les modifications du bas de l'image. Ce dispositif simple ne convient donc pas bien pour les images animées. D'autre part, la luminosité des tubes cathodiques est souvent insuffisante pour un usage en plein-air, d'autant plus qu'elle est diminuée par le dispositif optique. Cette luminosité est limitée par une saturation des luminophores de l'écran des tubes, saturation qui dépend de l'énergie du faisceau électronique et de sa vitesse de balayage.

Le dispositif selon l'invention évite ces inconvénients tout en faisant appel à des technologies qui sont classiques.

Selon l'invention, un dispositif d'affichage d'une image de télévision de grandes dimensions, comportant: une pluralité de tubes cathodiques juxtaposés pour former une matrice de N lignes et M colonnes (N et M entiers supérieurs à 1), chaque tube cathodique contenant au moins un faisceau électronique reproduisant sur un écran luminescent une portion rectangulaire de l'image à afficher; des dispositifs optiques respectivement placés vis-à-vis des écrans et associés à chaque portion d'image pour l'agrandir dans un rapport tel que les portions d'image agrandies apparaissent jointives, en dépit des jointures entre les tubes, est caractérisé en ce qu'il comporte en outre: des mémoires dites de portion d'image, associées respectivement à chaque tube cathodique, pour stocker les informations correspondant à la portion d'image restituée sur ce tube cathodique; des moyens de commande des mémoires; des moyens de balayage horizontal et des moyens de balayage vertical pour restituer chaque portion d'image avec un balayage vertical de période au moins N fois plus petite que la période de balayage vertical d'analyse.

Le dispositif selon l'invention comporte donc une première partie constituée de tubes cathodiques et de dispositifs optiques, et une seconde partie constituée de circuits électroniques.

L'invention sera mieux comprise et d'autres détails apparaîtront à l'aide de la description ci-dessous et des figures l'accompagnant:

La figure 1 représente un premier exemple de réalisation de la première partie du dispositif selon l'invention;

La figure 2 représente une partie de cet exemple, selon une première variante;

La figure 3 représente une partie de cet exemple, selon une seconde variante;

Les figures 4 et 5 illustrent le fonctionnement de la première partie du dispositif selon l'invention;

La figure 6 représente un second exemple de réalisation de la première partie du disposition selon l'invention;

La figure 7 représente une partie de ce dernier exemple de réalisation;

La figure 8 représente le schéma synoptique d'un exemple de réalisation de la seconde partie du dispositif selon l'invention.

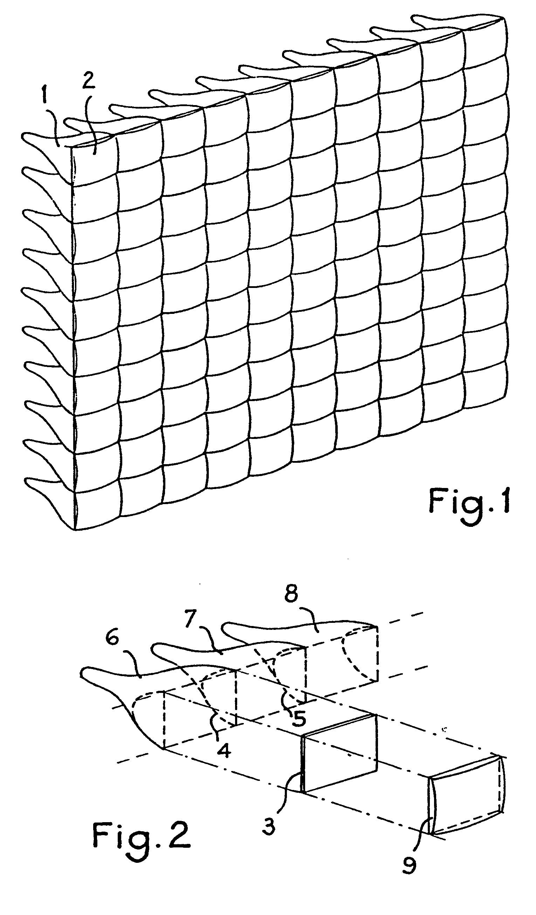

L'exemple de réalisation représenté sur la figure 1 comporte 100 tubes cathodiques juxtaposés pour former une matrice 10×10. Chaque tube cathodique 1 comporte un écran rectangulaire devant lequel est placé un dispositif optique 2 transmettant et agrandissant l'image fournie par l'écran. Cette image est une fraction de l'image à reproduire sur l'ensemble du dispositif. L'écran de chaque tube cathodique 1 a une longueur et une largeur de rapport 2/3 pour obtenir sur l'ensemble du dispositif une image ayant une longueur et une largeur de rapport 2/3.

Selon une première variante de réalisation chaque tube cathodique 1 est indépendant de ces voisins et chaque dispositif optique 2 est indépendant de ces voisins. Les tubes cathodiques 1 sont des tubes dont l'ampoule est analogue à celle des tubes d'oscilloscope à écran rectangulaire.

Selon une deuxième variante chaque tube cathodique 1 a une ampoule analogue à celle d'un tube cathodique pour récepteur de télévision classique, mais cette ampoule a subi un usinage modifiant sa forme pour permettre une juxtaposition plus serrée. La figure 2 représente une vue éclatée d'une partie du dispositif selon l'invention, constituée de trois ampoules usinées sur les deux côtés correspondant à la largeur de l'image pour découper deux troncatures planes parallèles au plan vertical de symétrie du tube. Par exemple, l'ampoule 7, du tube situé au centre de la figure, comporte deux troncatures 4 et 5 qui sont soudées aux troncatures des ampoules 6 et 8 des tubes voisins sur la même ligne. Les ampoules de tous les tubes d'une ligne de la matrice sont ainsi rendues solidaires. Par contre, les ampoules des tubes de deux lignes consécutives sont complétement indépendantes. La face avant de chaque ampoule est fermée par un écran 3 constitué d'une dalle de verre plane, et comportant des luminophores. Dans cet exemple le dispositif optique 2 est constitué par une lentille 9, convergente et épaisse, collée sur la face externe de la dalle de verre. Dans un autre exemple de réalisation le dispositif optique 2 peut être constitué par une lentille de Fresnel, celle-ci ayant l'avantage d'avoir une épaisseur plus faible et relativement constante, et de produire des reflets plus diffus rendant moins gênantes les réflexions parasites de la lumière ambiante.

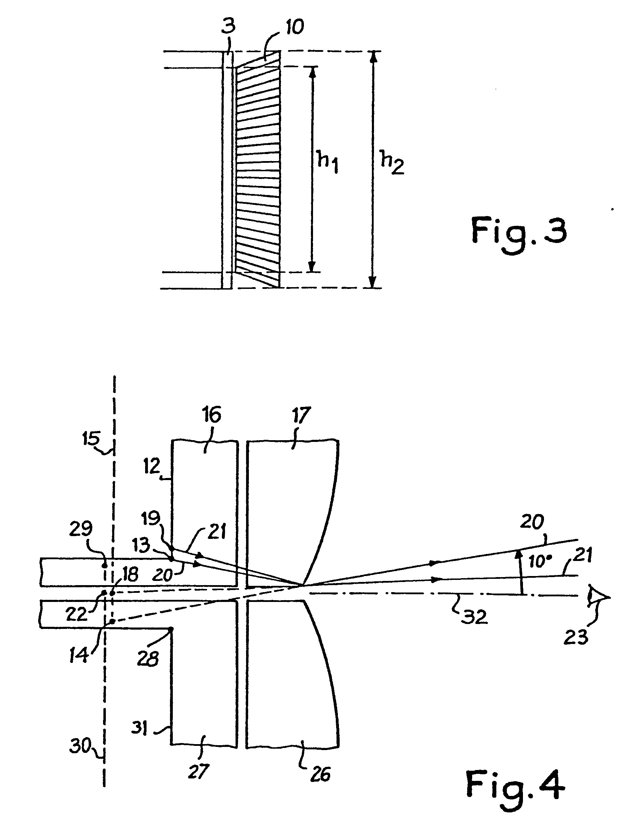

La figure 3 représente un autre mode de réalisation du dispositif optique 2, constitué par une dalle 10 de fibres optiques légèrement divergentes, telle qu'une image réelle présente sur la première face st transmise sur la seconde face avec un agrandissement déterminé, identique dans toutes les directions du plan de l'image. Par exemple, sur la figure 3 l'image fournie par les luminophores situés sur la face interne de l'écran 3, a une hauteur $h_1$. Elle est transmise par la dalle de fibres optiques 10 et a une hauteur $h_2$ à la sortie de la dalle 10, la hauteur $h_2$ étant égale à la hauteur totale du tube cathodique. De même, l'image est agrandie dans la direction horizontale. L'image observée couvre donc toute la surface de la face avant du tube cathodique, en masquant les bordures correspondant aux parois. Une telle dalle de fibres optiques peut être fabriquée selon les techniques connues pour réaliser des faisceaux de fibres agrandissant une image, et pour réaliser des dalles de fibres optiques sans agrandissement. Par rapport aux lentilles, les dalles de fibres optiques présentent l'avantage de permettre un plus grand champ de bonne visibilité par les spactateurs et elles ne réfléchissent pratiquement pas la lumière ambiante.

Par ailleurs, de récents développements dans le domaine de l'optique holographique permettent de réaliser un dispositif optique grossissant polychromatique, en combinant deux ou trois éléments optiques holographiques, qui sont des réseaux ou des lentilles holographiques. Un tel dispositif est décrit dans Optica Acta de 1982, volume 29, n° 4, pages 514–529.

La figure 4 illustre le fonctionnement du dispositif optique 2 dans l'exemple de réalisation où le dispositif 2 est constitué d'une lentille épaisse. Cette figure représente la coupe de la jonction de deux tubes cathodiques 16 et 27, et des deux lentilles épaisses 17 et 26 collées sur la surface externe de la face avant de ces tubes. Le faisceau électronique du tube 16 forme une image réelle 12 sur la surface interne de la face avant de ce tube. Le faisceau électronique du tube 27 forme une image réelle 31 sur la surface interne de la face avant de ce tube. Les lentilles 17 et 26 fournissent des images agrandies, 15 et 30 respectivement, qui sont situées dans un même plan, parallèle au plan des images 12 et 31. Les images 15 et 30 sont virtuelles, elles sont représentées par des pointillés. Pour faire apparaître qu'elle possèdent des parties se recouvrant elle sont représentées avec un léger décalage. Dans les images réelles 12 et 31 les points les plus proches de la frontière entre les deux tubes sont les points 13 et 28. Ces points 13 et 28 émettent des rayons lumineux qui donnent une image virtuelle 14 du point 13 et une image virtuelle 29 du point 28. Les points 14 et 29 sont évidemment situés en bordure des images virtuelles 15 et 30 respectivement. La convergence des lentilles 17 et 26 est identique; elle est telle que le rayon lumineux 20 issu du point 13 et passant par le bord de la lentille 17, fait avec le plan de symétrie 32 un angle de 10°.

Un observateur 23 placé exactement en face du dispositif d'affichage, c'est-à-dire dans le plan de symétrie 32, perçoit un rayon lumineux 21 qui sort de la lentille 17 parallèlement au plan 32. L'observateur 23 voit alors un point 18, de l'image virtuelle 15, qui est l'image d'un point 19, de l'image réelle 12, qui n'est pas situé en bordure de cette image réelle 12. Par raison de symétrie, il voit confondu avec le point 18, un point 22 de l'image virtuelle 15. Les images virtuelles 15 et 30 reproduisent chacune une portion de l'image à afficher, en reproduisant les mêmes éléments de cette image dans la zone où elles se recouvrent, c'est-à-dire entre les points 29 et 14. Notamment les points 18 et 22 correspondent à un même élément de l'image à afficher. Cependant il faut noter que l'observateur 23 ne voit pas une superposition des images virtuelles 15 et 30 dans la zone de recouvrement. Dans le cas représenté sur la figure 4, c'est-à-dire lorsque l'observateur 23 est situé dans le plan de symétrie 32, il ne voit pas les points situés entre les points 18 et 14 de l'image virtuelle 15 et il ne voit pas les points situés entre les points 22 et 29 de l'image virtuelle 30, par raison de symétrie. Les parties visibles des images virtuelles 15 et 30 apparaissent donc jointives aux points 18 et 22, l'image affichée est donc reproduite sans discontinuité.

Quand l'observateur se déplace en s'écartant du plan de symétrie 32, la partie non visible en bordure de chaque image virtuelle varie. La surface de l'une augmente alors que la surface de l'autre diminue car les points de la jonction entre ces deux images restent situés sur une ligne droite passant par le bord commun des lentilles 17 et 26 et par l'observateur.

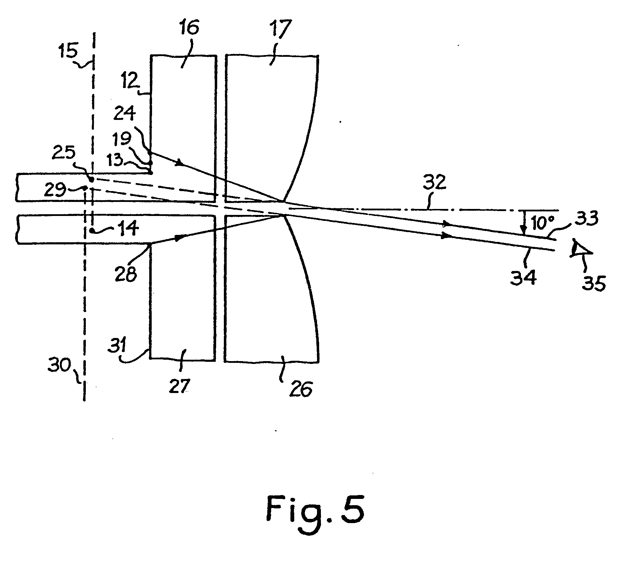

Dans un cas, considéré comme cas limite, la direction de vue d'un observateur fait un angle de 10° avec le plan de symétrie 32. Ce cas est représenté sur la figure 5. L'observateur, 35, perçoit alors un rayon lumineux 33 provenant d'un point 25 de l'image virtuelle 15, image d'un point 24 de l'image réelle 12, non situé sur la bordure de celle-ci. L'observateur perçoit en outre un rayon 34, paraissant issu du point 29 de l'image virtuelle 30 mais qui est émis par le point 28 situé au bord de l'image réelle 31, car la convergence des lentilles 17 et 26 est telle qu'un rayon émis par le point 28 et passant par le bord de la lentille 26 est issu de celui-ci en faisant un angle de 10° par rapport au plan 32, le point 13 étant symétrique du point 28 par rapport au plan 32. L'observateur 35 voit donc confondus les points 25 et 29. Comme il a été mentionné précédemment ces points corespondent à un même élément de l'image à afficher, puisqu'ils appartiennent à la zone de recouvrement des images virtuelles 15 et 30. L'observateur 35 voit toute l'image virtuelle 30, jusqu'au point 29. Il voit donc jointives les images virtuelles 15 et 30 aux points 25 et 29. Les points situés entre les points 14 et 25 de l'image 15 ne sont pas visibles par l'observateur 35 car ils sont masqués par la jointure entre les tubes 16 et 27 et la jointure entre les lentilles 17 et 26. Il y a donc raccordement entre les images virtuelles 15 et 30 sans qu'une superposition soit visible par un doublement de la luminosité.

Pour un angle de vue quelconque, compris entre 0 et ±10°, la jonction entre les parties visibles des images virtuelles 15 et 30 est située entre les points 14 et 25, sans discontinuité, ni recouvrement. Pour un angle de vue supérieur à 10° il apparaît une discontinuité entre les deux images virtuelles 15 et 30.

L'angle de vue ne se limite pas à la valeur de ±10°. Un compromis est à réaliser entre le champ de vision obtenu et les difficultés de réalisation des lentilles, difficultés qui augmentent quand le grandissement est augmenté.

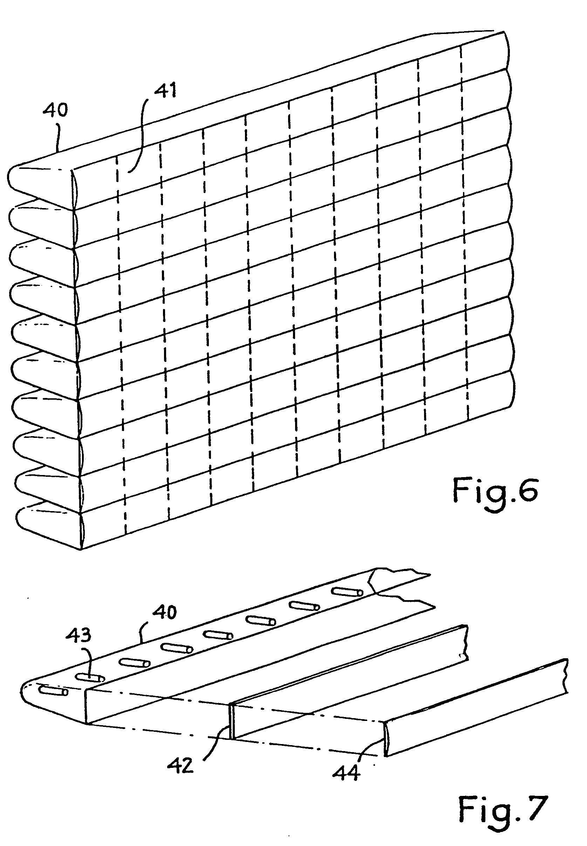

Un second mode de réalisation du dispositif selon l'invention est représenté sur la figure 6. Le dispositif est constitué de 10 dispositifs linéaires d'affichage 40 qui sont juxtaposés en étant accolés sur leur plus grand côté, ce plus grand côté ayant la longueur d'une ligne de l'image à afficher. Chaque dispositif 40 permet d'afficher 10 portions de l'image à restituer. Chacune de ces 10 portions d'image est générée par un faisceau électronique indépendant, puis est transmise et agrandie par un dispositif optique 41 qui permet le raccordement de chaque portion d'image avec cells fournies par les 2 dispositifs 40 voisins au-dessus et au-dessous, en agrandissant les portions d'image perpendiculairement aux jointures des dispositifs 40. D'autre part le balayage de chaque faisceau électronique est réglé de façon à rendre jointives les portions d'image fournies par un même dispositif 40.

La figure 7 représente une vue éclatée d'un dispositif 40 et du dispositif optique 41 qui lui est associé. Le dispositif 40 a une section longitudinale en forme de gouttière analogue à la section longitudinale d'un tube cathodique d'oscilloscope, et il contient 10 canons à électrons 43 comportant chacun une paire de plaques de déviation verticale et une paire de plaques de déviation horizontale, non représentées. Lesdits canons 43 sont parallèles entre eux et sont perpendiculaires à la face avant du dispositif 40. La face avant du dispositif 40 est fermée par une dalle de verre 42, recouverte de luminophores pour générer 10 portions d'image côte à côte. Le dispositif optique 41 est constitué par une lentille cylindrique convergente 44, dont l'axe de symétrie est parallèle à la longueur du dispositif 40, et qui est collée sur la face externe de la dalle de verre 42. Le dispositif 41 peut aussi être constitué d'une lentille de Fresnel cylindrique. Le fonctionnement du dispositif optique 41 est analogue à celui décrit précédemment et représenté sur les figures 4 et 5. Il permet d'éviter la vision de la jointure entre deux dispositifs 40 accolés. Le grand côté de chaque dispositif 40 étant parallèle aux lignes de balayage de l'image à restituer, les jointures provoquent cependant des discontinuités entre les lignes de l'image lorsqu'un observateur n'est pas exactement en face du dispositif. En pratique, les observateurs se déplacent horizontalement devant le dispositif d'affichage mais se déplacent peu dans le plan vertical, par conséquent les discontinuités entre les lignes ne seront pas très gênantes pour les observateurs. Dans ce mode de réalisation, d'éventuelles discontinuités entre les bords verticaux des portions d'image peuvent être causées par un mauvais réglage des faisceaux électroniques générant ces portions d'image, par contre il n'y a pas de discontinuités dues à la présence de deux parois de verre comme c'est le cas lorsque des tubes cathodiques indépendants sont juxtaposés. Ces discontinuités peuvent donc être facilement éliminées par un réglage précis des balayages notamment en prévoyant des bandes de luminophores d'indexation sur la face interne de la dalle 42.

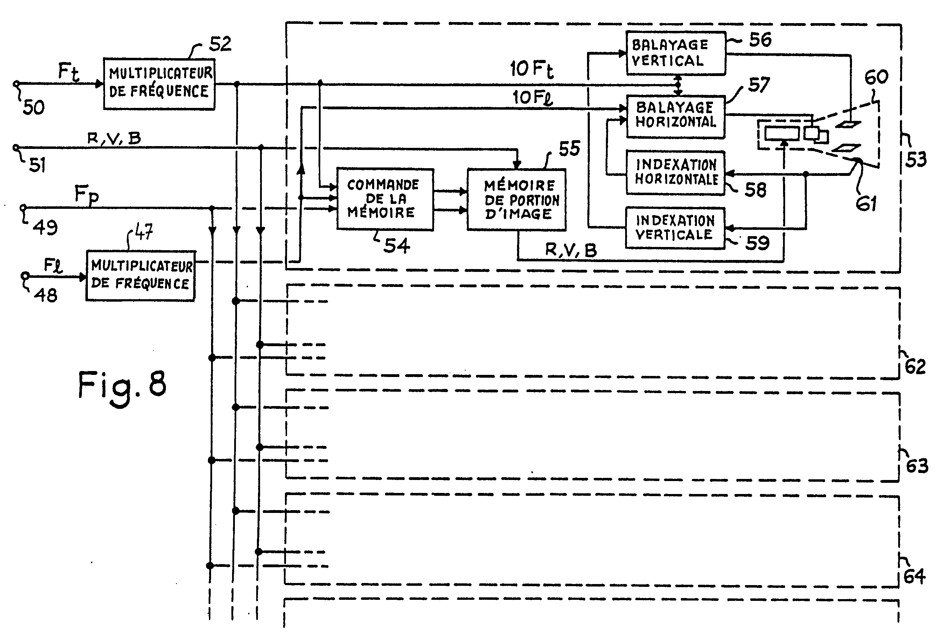

La figure 8 représente le schéma synoptique d'un exemple de réalisation de la seconde partie du dispositif d'affichage selon l'invention. Cet exemple comporte 100 faisceaux électroniques formant 100 portions d'image, chaque portion d'image étant engendrée par un dispositif électronique tel que le dispositif 53 représenté sur la figure 8. Sur la figure 8 les autres dispositifs électroniques: 62, 63, 64, etc. ne sont pas détaillés car ils sont identiques au dispositif 53. Chaque image est restituée par une matrice de 10×10 portions d'image rectangulaires.

Il est nécessaire de bien distinguer les lignes du balayage d'analyse et les lignes du balayage de restitution: le balayage d'analyse comporte deux trames de 312,5 lignes de 64 μS et le balayage de restitution est constitué de deux trames de 312,5 lignes de 6,4 μS pour chaque portion d'image. La période des trames d'analyse est de 20 mS, alors que la période des trames de restitution est de 2 mS. Ainsi chaque point de l'image analysée est restitué par 10×10 points d'une portion d'image, qui ont les mêmes valeurs R, V, B. Chaque tube cathodique est donc balayé par 312,5 lignes toutes les 2 mS, c'est-à-dire 10 fois plus souvent que dans un moniteur classique. 310 lignes de balayage sont utilisées pour restituer 31 portions de ligne d'une trame analysée et les 2,5 lignes restantes sont inutilisées.

Quatre bornes d'entrée 48, 49, 50 et 51 et deux multiplicateurs de fréquence par dix 52 et 47 sont communs à l'ensemble de ces dispositifs électroniques 53, 62, 63, 64, etc... La borne d'entrée 50 reçoit un signal de synchronisation à la fréquence $F_t$ d'analyse de trames et le fournit au multiplicateur 52 qui génère un signal de fréquence 10 $F_t$ correspondant à une période de 6,4 μS. La borne d'entrée 51 reçoit les valeurs numériques R, V, B des signaux de couleur rouge, verte, et bleue. La borne d'entrée 49 reçoit un signal d'horloge à la fréquence $F_p$ d'analyse des points. La borne d'entrée 48 reçoit un signal d'horloge à la fréquence $F_l$ des lignes d'analyse, correspondant à la période de 64 μS. Elle le fournit au multiplicateur de fréquence 47 qui restitue un signal de fréquence 10 $F_t$, c'est-à-dire de période 2 mS.

Le dispositif 53 comporte un tube cathodique 60 ayant un canon à électrons, unique pour les trois couleurs, une paire de plaques de déviation horizontale, une paire de plaques de déviation verticale, et une cellule photo-électrique 61 sensible uniquement au rayonnement ultraviolet pour détecter le passage du faisceau électronique sur des luminophores d'indexation émettant dans l'ultraviolet. Les luminophores, rouge, vert, bleu forment des bandes parallèles perpendiculaires à la direction des lignes et séparées par des bandes de luminophore ultraviolet. D'autre part des bandes de luminophore ultraviolet, parallèles aux lignes, délimitent des groupes de 10 lignes. Le dispositif 53 comporte en outre une mémoire 55, dite de portion d'image, un dispositif 54 de commande de la mémoire, un dispositif 56 de balayage vertical, un dispositif 57 de balayage horizontal, un dispositif 58 d'indexation horizontale, et un dispositif 59 d'indexation verticale.

Le dispositif de commande 54 reçoit les signaux de fréquence $F_p$, 10 $F_t$ et 10 $F_l$ et fournit une adresse d'écriture et un signal de commande d'écriture à la mémoire 55 pendant certains intervalles de temps et il fournit une adresse de lecture et un signal de commande de lecture à la mémoire 55 pendant d'autres intervalles de temps. La mémoire 55 possède une entrée de données reliée à la borne 51 et une sortie de données fournissant un signal de commande rouge, ou vert, ou bleu, à une entrée de commande du canon à électrons du tube 60. Le signal appliqué au canon à électrons est un signal analogique fourni par un convertisseur numérique-analogique non représenté, à partir des données numériques stockées dans la mémoire de portion d'image.

Le dispositif 57 de balayage horizontal possède une entrée recevant le signal de fréquence 10 $F_l$ et

une entrée d'asservissement reliée à une sortie du dispositif 58 d'indexation horizontale. Le dispositif 56 de balayage vertical possède une entrée d'asservissement reliée à une sortie du dispositif 59 d'indexation verticale. Les dispositifs de balayage 56 et 57 possèdent chacun une entrée recevant le signal de fréquence 10 $F_t$ fourni par le multiplicateur de fréquence 52, et ils génèrent respectivement un signal de balayage vertical et un signal de balayage horizontal appliqués respectivement aux plaques de déviation verticale et aux plaques de déviation horizontale du tube 60. Ces signaux ont respectivement une fréquence égale à 10 fois la fréquence du balayage vertical d'analyse et à 10 fois la fréquence du balayage horizontal d'analyse.

Les valeurs R, V, B de chaque point de l'image analysée sont stockées dans la mémoire 55 au fur et à mesure de l'analyse, c'est-à-dire à la fréquence $F_p$ lorsque le point considéré est un des points à reproduire par le tube 60 considéré. Le dispositif 54 réalise un comptage des lignes et des points pour déterminer les valeurs qui sont à stocker. Pendant la durée, 64 µS, de chaque ligne d'analyse les valeurs à stocker ne correspondent qu'à une durée de 64 µS, si la ligne en cours d'analyse parcout la portion d'image considérée. Si ce n'est pas le cas, il n'y a aucune valeur à stocker dans la mémoire 55 pendant les 64 µS.

Les valeurs R, V, B nécessaires pour restituer chaque point de la portion d'image restituée sont lues à la fréquence $F_p$ dans la mémoire 55. Chaque triplet permet de restituer 10 points successifs sur le tube 60. La lecture d'une triplet RVB est réitérée pour 10 lignes de restitution, avec une période de 6,4 µS correspondant à la fréquence des lignes de restitution, et cette série de 10 lectures est réitérée avec une période 2 mS correspondant à la période des trames de restitution. La fréquence de lecture et la fréquence d'écriture étant égales à la fréquence $F_p$ d'analyse des points, il est aisé d'intercaler les opérations de lecture et les opérations d'écriture.

La mémoire 55 peut être constituée de 31 mémoires à circulation, fonctionnant en parallèle et ayant un nombre d'étages égal à un dixième du nombre de points analysés sur chaque ligne, et dont les entrées sont multiplexées dans le temps pour stocker successivement les valeurs R, V, B correspondant à 31 portions de lignes d'analyse successives, et dont les sorties sont multiplexées pour restituer 10 fois les valeurs R, V, B d'une portion d'une première ligne d'analyse, puis 10 fois les valeurs R, V, B d'une portion d'une seconde ligne d'analyse, etc...

Chaque triplet de valeurs R, V, B lu dans la mémoire 55 est utilisé pendant la durée de 10 points du balayage de restitution, un même point d'image est donc restitué identiquement 100 fois pendant la durée d'une trame d'analyse. Par rapport à la restitution classique sur un tube cathodique balayé une seule fois, la luminosité obtenue peut donc être multipliée par 100, sans saturer les luminophores.

Le début du stockage des valeurs R, V, B dans les mémoires 55 des dispositifs 53, 62, 63, 64 correspondant à différentes portions d'image, est décalé dans le temps de 6,4 µS pour tenir compte de la position relative de ces différentes portions d'image, par contre la lecture dans les diverses mémoires 55 peut être synchrone ou être décalée sans inconvénient.

Chaque portion d'image restituée correspondant à 62 lignes d'analyse, il n'y a pas de problème de finesse de la tache lumineuse générée par le faisceau électronique. L'intensité du faisceau appliqué en chaque point peut donc être beaucoup plus importante que dans un tube cathodique classique, et la luminosité du dispositif d'affichage selon l'invention n'est alors limitée que par la possibilité d'émission thermo-électrique des cathodes.

Chaque tube 60 est associé à une lentille convergente, non représentée. Il est prévu un recouvrement des images virtuelles fournies par deux tubes voisins et les lentilles associées, pour permettre de voir jointives ces images même si l'observateur a une direction de vue faisant un angle de $\pm 10°$ par rapport à la normale au dispositif d'affichage. A cette fin, chaque tube 60 reproduit sur chaque bord de son image quelques rangées de points d'image identiques à celles reproduites par le tube 60 voisin sur ce bord. Le nombre de rangées peut être égal à 3, par exemple.

La période des trames de restitution étant très courte, 2 mS, il y a évidemment suppression de tout scintillement de l'image.

A titre indicatif la consommation des cathodes dans un dispositif comportant 100 canons électroniques est de 60 watts si chaque cathode est chauffée par une puissance de 0,6 watts, la puissance dissipée par les cathodes est donc faible. Les tubes cathodiques utilisés sont des tubes à déviation électrostatique afin de permettre une commande en tension, ayant l'avantage d'une faible inertie, d'une faible consommation de puissance, et d'un temps de retour très bref.

Les dispositifs 58 et 59 d'indexation horizontale et d'indexation verticale peuvent être réalisés comme ceux décrits dans le brevet US-A 4 433 105. Les dispositifs 56 et 57 de balayage vertical et de balayage horizontal comparent la fréquence des signaux d'indexation horizontale et d'indexation verticale fournis par les dispositifs 58 et 59, avec la fréquence et la phase du signal d'horloge à la fréquence $F_l$ et du signal d'horloge à la fréquence 10 $F_t$ respectivement. Il corrigent le balayage vertical et le balayage horizontal afin d'ajuster avec précision le cadrage et la linéarité de la portion d'image générée par le tube 60. Un réglage manuel peut être prévu sur les dispositifs 56 et 57 pour compenser des défauts de raccordement dûs aux tolérances sur les verreries et les soudures. Dans la direction verticale les défauts de raccordement peuvent être corrigés par un réglage continu de la position de chaque portion d'image car les luminophores sont constitués de bandes verticales continues. Par contre les défauts de raccordement sur les bordures horizontales des tubes ne peuvent être corrigés que d'un nombre entier de points d'image, à cause de la structure discontinue des luminophores.

Dans ce dispositif l'utilisation de tubes cathodiques à indexation permet une grande précision de restitution des portions d'image, ce qui permet de minimiser les défauts de raccordement entre les portions d'image.

L'augmentation de la vitesse de balayage horizontal par un facteur 10 permet d'augmenter par un facteur 10 l'énergie du faisceau électronique sans saturer les luminophores, ce qui augmente d'un facteur 10 la brillance de l'image restituée.

L'augmentation de la vitesse de balayage vertical par un facteur 10, c'est-à-dire égal au nombre de rangées de tubes, permet d'augmenter la luminosité d'un facteur 10 supplémentaire et permet de restituer une trame en 20 mS, c'est-à-dire la même durée que l'analyse, ce qui permet une bonne restitution des images animées.

Naturellement, si on renonce à ce dernier avantage il est possible de simplifier les moyens de balayage vertical en choisissant une période de 20 mS comme dans les moniteurs classiques. Le multiplicateur 47 est alors supprimé du schéma synoptique. Il est possible aussi de renoncer à une partie de l'augmentation de luminosité, tout en conservant une bonne restitution des images animées, en choisissant une période de balayage horizontal égale à 64 µS et une période de balayage vertical de 2 mS. Le multiplicateur 52 est alors supprimé du schéma synoptique. Cette variante a pour avantage de permettre l'utilisation de tubes cathodiques classiques à déviation verticale et horizontale magnétique, car la fréquence de balayage horizontal reste assez basse. Les tubes cathodiques classiques étant produits en grande série, leur coût est beaucoup plus faible que celui de tubes à déviation électrostatique réalisés spécialement pour cette application.

L'invention ne se limite pas aux exemples de réalisation décrits ci-dessus. Il est à la portée de l'homme de l'art d'utiliser d'autres types de tubes cathodiques, par exemple comportant 3 canons électroniques et un masque, ou bien comportant des moyens de déviation magnétique, ou balayés avec une fréquence de balayage verticale encore plus élevée. Il est possible aussi d'utiliser des mémoires à accès aléatoire et de les lire à une fréquence différente de la fréquence d'analyse des points.

Naturellement, il est possible de constituer une matrice avec un nombre quelconque de faisceaux et un nombre quelconque de tubes. Si la matrice comporte N lignes et M colonnes il est nécessaire de choisir une vitesse de balayage vertical au moins égale à N fois la vitesse du balayage vertical d'analyse, pour avoir une durée de restitution pas plus longue que la durée d'analyse. D'autre part, si la vitesse du balayage horizontal est choisie égale à M fois la vitesse du balayage horizontal d'analyse, la fréquence de lecture est égale à la fréquence d'écriture dans les mémoires 55, ce qui procure donc une simplification des moyens de commande de celle-ci. En outre, toute augmentation de la vitesse de balayage horizontal permet d'augmenter l'énergie du faisceau sans saturer les luminophores.

L'invention peut être appliquée aux moniteurs et aux récepteurs de télévision.

**Revendications**

1. Dispositif d'affichage d'une image de télévision de grandes dimensions, comportant: une pluralité de tubes cathodiques (1) juxtaposés pour former une matrice de N lignes et M colonnes (N et M entiers supérieurs à 1), chaque tube cathodique (1) contenant au moins un faisceau électronique reproduisant sur un écran luminescent (3) une portion rectangulaire de l'image à afficher; des dispositifs optiques (2) respectivement placés vis-à-vis des écrans (3) et associés à chaque portion d'image pour l'agrandir dans un rapport tel que les portions d'image agrandies apparaissent jointives, en dépit des jointures entre les tubes (1), caractérisé en ce qu'il comporte en outre des mémoires (55) dites de portion d'image, associées respectivement à chaque tube cathodique, pour stocker les information correspondant à la portion d'image restituée sur ce tube cathodique (1); des moyens (47, 52, 54) de commande des mémoires (55); des moyens de balayage horizontal (47, 52) et des moyens de balayage vertical (56 à 59) pour restituer chaque portion d'image avec un balayage vertical de période au moins N fois plus petite que la période de balayage vertical d'analyse.

2. Dispositif selon la revendication 1, caractérisé en ce que les moyens de balayage horizontal (47, 52) réalisent un balayage horizontal de période très inférieure à la période de balayage horizontal d'analyse.

3. Dispositif selon la revendication 1, caractérisé en ce que les moyens de balayage vertical (56 à 59) réalisent un balayage vertical de période N fois inférieure à la période de balayage vertical d'analyse, et en ce que les moyens de balayage horizontal (47, 52) réalisent un balayage horizontal de période M fois inférieure à la période de balayage horizontal d'analyse.

4. Dispositif selon la revendication 1 pour images en couleurs, caractérisé en ce que chaque faisceau est émis par un canon électronique unique pour trois couleurs; rouge, verte, et bleue; en ce que le faisceau est dévié électrostatiquement par deux paires de plaques; en ce que l'écran luminescent (3) comporte des luminophores de couleurs et des luminophores d'indexation; et en ce que le dispositif comporte des moyens (61) de détection de la lumière émise par les luminophores d'indexation et des dispositifs d'indexation (58 et 59) pour fournir des signaux d'indexation aux moyens de balayage (52 et 56 à 59).

5. Dispositif selon la revendication 1, caractérisé en ce qu'il comporte une pluralité de tubes cathodiques (1) dont les ampoules (6, 7, 8), à l'exception de celles des tubes (1) situés à la périphérie de la matrice, comportant deux troncatures (4, 5) planes et parallèles à l'un des plans de symétrie du tube (1), et en ce que le bord de chaque troncature (4, 5) est soudé au bord d'une troncature d'un tube (1) voisin.

6. Dispositif selon la revendication 1, caractérisé en ce que les faisceaux électroniques sont situés à l'intérieur de dispositifs linéaires d'affichage (40) dont la plus grande dimension est égale à la longueur d'une ligne de l'image à afficher, et qui sont disposés parallèlement les uns aux autres et juxtaposés, chacun de ces dispositifs linéaires (40) comportant une pluralité de canons à électrons (43), parallèles et coplanaires, munis de dispositifs de déviations, et reproduisant chacun une portion rectangulaire de l'image à afficher, les portions d'images restituées par un même dispositif linéaire (40) étant alignées et rendues jointives par un ajustement des balayages dans la direction de l'alignement des portions d'image.

## Patentansprüche

1. Wiedergabevorrichtung für ein Fernsehbild grosser Dimension, bestehend: aus einer Mehrzahl von zur Bildung einer Matrix aus N Linien und M Kolonnen aneinandergesetzten Kathodenstrahlröhren (1) (N und M sind ganze Zahlen grösser als 1), von denen jede mindestens einen Elektronenstrahl zur Wiedergabe eines rechteckigen Anteiles des auf einem Leuchtschirm (3) wiederzugebenden Bildes enthält; und aus optischen Vorrichtungen (2), welche vor den Leuchtschirmen (3) angeordnet und mit den Bildteilen zwecks Vergrösserung um einen solchen Grad assoziiert sind, dass die vergrösserten Bildteile trotz der Fugen zwischen den Bildröhren (1) fugenlos miteinander verbunden erscheinen, dadurch gekennzeichnet, dass die Vorrichtung ferner Bildanteilsspeicher (55) besitzt, die jeweils mit den Kathodenstrahlröhren assoziiert sind und Informationen speichern, welche dem mit der Röhre wiederzugebenden Bildteil entsprechen; und dass Steuermittel (47, 52, 54) für die Speicher (55), Mittel für die Horizontalabtastung (56 bis 59) vorhanden sind, um die Bildteile vertikal mit einer Periode wiederzugeben, die Nmal kleiner ist als die Periode der vertikalen analytischen Abtastung.

2. Vorrichtung nach Anspruch 1, dadurch gekennzeichnet, dass die Mittel zur horizontalen Abtastung (47, 52) dieselbe mit einer wesentlich kleineren Periode bewirken als die Periode der horizontalen analytischen Abtastung beträgt.

3. Vorrichtung nach Anspruch 1, dadurch gekennzeichnet, dass die Mittel für die vertikale Abtastung (56 bis 59) dieselbe mit einer Periode bewirken die Nmal kleiner ist als die Periode der vertikalen analytischen Abtastung und dass die Mittel zur horizontalen Abtastung (47, 52) dieselbe mit einer Periode bewirken, die Mmal kleiner ist als die Periode der horizontalen analytischen Abtastung beträgt.

4. Vorrichtung nach Anspruch 1 für farbige Bilder, dadurch gekennzeichnet, dass jeder Strahl von einer einzigen Elektronenkanone für die drei Farben Rot, Grün und Blau erzeugt wird; dass dieser Strahl elektrostatisch durch zwei Plattenpaare abgelenkt wird; dass der Leuchtschirm (3) Leuchtstoffe für die Farben und Leuchtstoffe für die Indexierung aufweist und dass die Vorrichtung Mittel (61) für die Detektion des von den Indexierungsleuchtstoffen emittierten Lichtes sowie Indexierungseinrichtungen (58 und 59) zur Lieferung von Indexierungssignalen durch die Abtastmittel (52 und 56 bis 59) besitzt.

5. Vorrichtung nach Anspruch 1, dadurch gekennzeichnet, dass sie eine Mehrzahl von Kathodenstrahlröhren (1) besitzt, deren Gefässe (6, 7, 8) mit Ausnahme der an der Peripherie der Matrix gelegenen Röhren (1), zwei flache parallel zu einer Symmetrieebene der Röhren verlaufende Abstumpfungen (4, 5) aufweisen, und dass der Rand der Abstumpfungen (4, 5) mit dem Rand der Abstumpfungen einer benachbarten Röhre (1) verschweisst ist.

6. Vorrichtung nach Anspruch 1, dadurch gekennzeichnet, dass die Elektronenstrahlen im Inneren linearer Anzeigeelemente vorhanden sind, deren grösste Ausdehnung der Länge einer wiederzugebenden Bildzeile entspricht und die parallel aneinanderliegend angeordnet sind, wobei jedes lineare Anzeigeelement (40) eine Mehrzahl von parallel und koplanar aufgestellten Elektronenkanonen enthält, mit Ablenkmitteln und jede zuständig für die Erzeugung eines Anteils des wiederzugebenden Bildes, wobei weiter die vom gleichen linearen Anzeigeelement erzeugten Teilbilder durch eine Justierung der Ablenkung in Richtung der Aneinanderreihung der Bildteile miteinander verbunden werden.

## Claims

1. A device for presenting TV pictures of large dimensions, comprising: a plurality of cathode ray tubes (1) assembled side by side in a matrix of N lines and M columns (N and M are integers greater than 1), each of which contains at least one electron beam for recording on a luminescent screen (3) a rectangular portion of the picture to be displayed; and optical devices (2) disposed in front of the screen (3) and associated with each picture portion for magnification to such a degree that the magnified picture portions appear jointless notwithstanding the joints between the tubes (1), characterized in that the device comprises in addition storage units (55) for the picture portions which are associated respectively with the cathode ray tubes and memorize the information corresponding to the picture portion recorded on the cathode ray tube, control means (47, 52, 54) for controlling the storage units (55), horizontal scanning means (47, 52) and vertical scanning means (56 to 59) for recording the picture portions vertically at a period N times shorter than the period of the vertical analysis scanning.

2. A device according to claim 1, characterized in that the means provided for the horizontal scanning (47, 52) implement this scanning at a

**0 135 413**

period much shorter than the period for the horizontal analysis scanning.

3. A device according to claim 1, characterized in that the vertical scanning means (56 to 59) implement this scanning at a period which is N times shorter than the period of the vertical analysis scanning, and that the horizontal scanning means (47, 52) implement this scanning at a period which is M times shorter than the period of the horizontal analysis scanning.

4. A device according to claim 1, adopted for color pictures, characterized in that each beam is emitted by a sole electron gun for the three colors red, green and blue; that the beam is deflected electrostatically by two pairs of plates; that the luminescent screen (3) contains luminophores for the colors and luminophores for the indexing; and that the device comprises means (61) for detecting light emitted by the indexing luminophores and indexing devices (58 and 59) for delivering indexing signals to the scanning means (52 and 56 to 59).

5. A device according to claim 1, characterized in that it comprises a plurality of cathode ray tubes (1) the glass bulbs (6, 7, 8) of which are provided with two truncated faces (4, 5) disposed parallelly to a symmetry plane of the tubes, except for the tubes (1) located at the periphery of the matrix, and that the rim of the said faces (4, 5) is welded to the rim of a truncated face of an adjacent tube (1).

6. A device according to claim 1, characterized in that the electron beams are included inside of linear display elements, the maximum dimension of which corresponds to the length of the picture line to be recorded and which are disposed parallelly side by side, and wherein each linear display element (40) contains a plurality of electron guns disposed in parallel and in one plane, having deflection means and recording each a portion of the picture to be recorded, and that the picture portions recorded by the same linear display element are joined together by an adjustment of the scanning in the direction of alignment of the picture portions.

Fig.1

Fig.2

Fig.3

Fig.4

Fig. 5

40

41

**Fig.6**

43

40

42

44

**Fig.7**

Fig. 8